# EUROPEAN PATENT SPECIFICATION

(11) **EP 3 715 336 B1**
(45) Date of publication and mention of the grant of the patent: **20.08.2025**
(21) Application number: 18904981.0
(22) Date of filing: 10.10.2018
(51) Int. Cl.: C05G 5/30

(54) **METHOD FOR PREPARING MULTI-COATING-STRUCTURE CONTROLLED-RELEASE FERTILIZER**
VERFAHREN ZUR HERSTELLUNG EINES DÜNGEMITTELS MIT KONTROLLIERTER FREISETZUNG MIT MEHREREN SCHICHTEN
PROCÉDÉ DE PRÉPARATION D'UN ENGRAIS À LIBÉRATION CONTRÔLÉE DE STRUCTURE MULTICOUCHE

(30) Priority: 09.02.2018 CN 201810139341
(43) Date of publication of application: 30.09.2020
(73) Proprietor: Zhengzhou Gaofu Fertilizer Co., Ltd, Henan 450000 (CN)
(72) Inventor: HU, Jianmin, Zhengzhou, Henan 450000 (CN); LIU, Xiaoyong, Kaifeng County Henan 450000 (CN); HU, Jinzhe, Zhengzhou, Henan 450000 (CN); WAN, Peikun, Henan 450000 (CN); BAI, Yuntao, Henan 450000 (CN); HU, Shumin, Henan 450000 (CN)
(74) Representative: Brevalex
(86) International application number: PCT/CN2018/109655
(87) International publication number: WO 2019/153776

(56) References cited:
- WO-A1-2007/025462
- CN-A- 103 524 200
- CN-A- 104 926 444
- CN-A- 105 330 494
- CN-A- 107 382 489
- CN-A- 107 586 223
- CN-A- 108 129 210
- CN-A- 108 456 121
- KR-A- 20010 086 703
- US-A- 5 849 060

## Description

### FIELD OF THE INVENTION

The present invention relates to fertilizers, and in particular, to a method for preparing multi-layer coating structure slow/controlled-release fertilizer.

### BACKGROUND OF THE INVENTION

The crop growth process, from seed to maturity, includes emergence of seedlings, tillering, jointing, booting, flowering, and seeding, mainly including two stages for nutrient absorption: nutrient growth and reproductive growth. Each stage requires different amounts of nutrients. However, the original nutrients in the soil generally cannot meet the nutritional needs of crops, so a certain proportion of fertilizers is required.

At present, most of fertilizers available on the markets contain fixed elements, for example, urea is a nitrogen fertilizer, calcium superphosphate contains phosphorus and calcium, potassium dihydrogen phosphate contains phosphorus and potassium, etc. Regardless of organic fertilizer, inorganic fertilizer, single fertilizer or compound fertilizer, the nutrients contained only meet the needs of a crop in one stage, but cannot meet the reasonable nutritional needs of a crop in the whole growth cycle.

In the actual cultivation, in order to ensure crops can absorb the relevant nutrients in different growth stages, it is necessary to calculate the required amount of elements, different types of fertilizers should be prepared to topdress the crops. This fertilization method is simply a combination of different types of fertilizers, and the nutrients often cannot be fully utilized, with low utilization rate of fertilizers. If it is required to enhance the yield and utilization rate of fertilizers, multiple topdressings should be carried out for the crops in different growth stages, with high labor intensity and high cost of fertilization.

With the improvement of planting techniques, soilless cultivation has emerged, and nutrients in the water can be detected at any time and the elements needed for the crop can be replenished in time. However, this method can only be applied in a small area, such as a greenhouse, and its investment and maintenance costs are high, so it cannot be applied to the large-scale agriculture.

The patent US 5 849 060 A discloses a controlled release granular fertilizer having water-soluble fertilizers as a nucleus and limited-soluble plant nutrient compounds as coating layers, wherein more than two coating layers of limited-soluble compounds are formed around the nucleus, by bonding the nucleus with the coating layers having various solubilities by means of an aqueous 6-30 wt % sulfuric acid or 30-60 wt % phosphoric acid (based on P₂O₅) solution mixed with monoammonium phosphate, diammonium phosphate, or ammonium bicarbonate as a binder, and the release rates of the nutrient compounds are controlled by regulating the solubilities of the limited-soluble compounds.

### SUMMARY OF THE INVENTION

The purpose of the present invention is to provide a method for preparing the multi-layer coating structure slow/controlled-release fertilizer. The method is simple and feasible, and it can achieve mass production and be used in large-scale agriculture.

The present invention employs the following technical solution to solve the technical problem thereof.

The present invention proposes a method for preparing multi-layer coating structure slow/controlled-release fertilizer, the fertilizer comprising a layer-by-layer coated fertilizer layer and a coating layer, wherein the fertilizer layer is separated from the coating layer, the fertilizer layer has at least two layers and the coating layer has at least one layer, and one of the fertilizer layers is a fertilizer core. The fertilizer layer includes at least two of nitrogen fertilizer, phosphorus fertilizer and potassium fertilizer, and the coating layer is polyurea formaldehyde. The raw materials of the polyurea formaldehyde are urea and formaldehyde, the molar ratio of the urea to the formaldehyde is 1-2.5:1, and the polyurea formaldehyde contains at least a polyurea formaldehyde having two to five carbon atoms.

The present invention provides a method for preparing the multi-layer coating structure slow/controlled-release fertilizer, the multi-layer coating structure slow/controlled-release fertilizer comprising a layer-by-layer coated fertilizer layer and a coating layer, wherein the fertilizer layer is separated from the coating layer, the fertilizer layer has at least two layers, the coating layer has at least two layers, and an the innermost layer of the fertilizer layers is a fertilizer core; the fertilizer layer includes at least two of nitrogen fertilizer, phosphorus fertilizer and potassium fertilizer, the coating layer is polyurea formaldehyde, wherein the raw materials of the polyurea formaldehyde are urea and formaldehyde, the molar ratio of the urea to the formaldehyde is 1-2.5:1, and the polyurea formaldehyde includes at least a polyurea formaldehyde having two to five carbon atoms, wherein the method comprising steps of: applying the fertilizer layer and the fertilizer corresponding to the coating layer to the periphery of the fertilizer core according to a preset order, to form layer-by-layer coated fertilizer granules; Wherein polyurea formaldehyde is prepared by the following steps: mixing urea and formaldehyde at a molar ratio of 1- 2.5:1, adjusting the pH of the reaction system to 7.5-11.5 and the temperature to 50°C°-75°C, and then adjusting the pH to 2.5^{~}5.5.The multi-layer coating structure slow/controlled-release fertilizer thus prepared consists of a fertilizer layer and a coating layer, and the fertilizer layer is separated from the coating layer, and layers are coated to form a spherical shape. The ratio of nutrients such as nitrogen, phosphorus, potassium and medium and trace elements in the fertilizer layer are designed according to the growth requirements of different crops under different soil structures and different climatic conditions. For the polyurea formaldehyde as a coating layer, the coated fertilizer can be slowly and timely released according to the fertilizer requirement of the crops to meet the growth needs of different crops. Part of the water-soluble nutrient elements in the coated fertilizer layer can be released from the pores formed by dissolution of the water-soluble part of the coating layer to be absorbed by the crops. The water-insoluble part of the coating layer is slowly decomposed under the action of soil microorganisms, to release all the remaining undissolved fertilizers in the fertilizer layer to be absorbed by the crops. As the coating layer decomposes layer by layer, the coated fertilizer layer is released layer by layer until the entire fertilizer granules are completely dispersed in the soil. Since the coating layer itself is also a fertilizer, the fertilizer does not produce any residue while satisfying the growth of the crop.

### BRIEF DESCRIPTION OF THE DRAWINGS

FIG. 1 is a cross-sectional view of a first multi-layer coating structure slow/controlled-release fertilizer prepared by a method according to an embodiment of the present invention.
FIG. 2 is a cross-sectional view of a second multi-layer coating structure slow/controlled-release fertilizer prepared by a method according to an embodiment of the present invention.

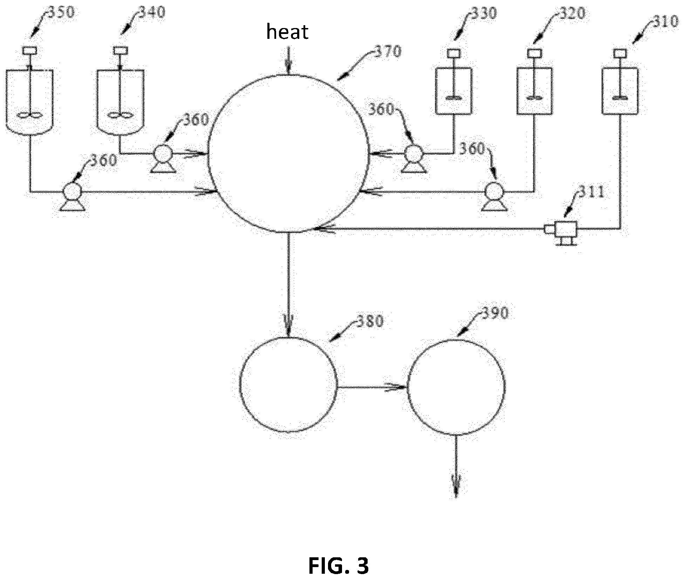

FIG. 3 is a production process flow chart of Example in the present invention.

Reference labels: 100 - fertilizer core; 110 - fertilizer layer; 120 - coating layer; 310 - powdering tank; 311 - powdering machine; 320 - first slurry tank; 330 - second slurry tank; 340 - first reactor; 350 - second reactor; 360 - liquid slurry pump; 370 - rotor drum granulator; 380 - drying machine; 390 - sieving machine.

### DETAILED DESCRIPTION OF THE INVENTION

In order to clarify the objects, technical solution and advantages of embodiments of the present invention, the technical solution in embodiments of the present invention will be described clearly and completely below. Where specific conditions are not specified in the embodiments, conventional conditions or conditions recommended by manufacturers are followed. Any reagent or instrument used which does not have a manufacturer specified is a commercially available conventional product.

The method for preparing multi-layer coating structure slow/controlled-release fertilizers in embodiments of the present invention are specifically described below.

The present invention provides a method for preparing multi-layer coating structure slow/controlled-release fertilizer, the multi-layer coating structure slow/controlled-release fertilizer comprising a layer-by-layer coated fertilizer layer 110 and a coating layer 120, wherein the fertilizer layer 110 is separated from the coating layer 120, there are at least two layers of fertilizer layer 110 and at least two layers of coating layer 120, and the innermost layer of the fertilizer layers 110 is a fertilizer core 100. The fertilizer layer 110 includes at least two of nitrogen fertilizer, phosphorus fertilizer and potassium fertilizer, and the coating layer 120 is polyurea formaldehyde, the raw materials of which are urea and formaldehyde, the molar ratio of the urea and the formaldehyde is 1-2.5:1, and the polyurea formaldehyde includes at least a polyurea formaldehyde having two to five carbon atoms. More specifically, the polyurea formaldehyde may have two to three carbon atoms, including dimethylol urea and monomethylenediurea that are soluble in cold water. In another embodiment, the polyurea formaldehyde may have two to five carbon atoms, including polyurea formaldehyde that is soluble in cold water, dimethylenetriurea and trimethylenetetraurea that are insoluble in cold water but soluble in hot water, and urea with a chain length having more than four carbons that is insoluble in hot water.

The polyurea formaldehyde includes at least a polyurea formaldehyde having two to five carbon atoms. It should be noted that when the fertilizer layer 110 contains two fertilizers such as nitrogen fertilizer, phosphorus fertilizer or potassium fertilizer, a single component can be a layer of the fertilizer layer 110. The mixture of the two fertilizers can be a layer of the fertilizer layer 110; or the two fertilizers can each form a layer, and collectively form a fertilizer layer 110. When the fertilizer layer 110 includes nitrogen fertilizer, phosphate fertilizer and potassium fertilizer, the mixture of the three fertilizers can form a layer of fertilizer layer 110. Or when the mixture of two fertilizers forms one layer and the other fertilizer forms another layer, the two layers can jointly form the fertilizer layer 110. In another embodiment, when each of the three fertilizers forms a layer separately, the three layers can collectively form a fertilizer layer 110 altogether. The NPK fertilizer may be a quick-acting urea, ammonium sulfate, ammonium hydrogen phosphate or potassium sulfate, or a mixture of slow-released urea formaldehyde, isobutylidene diurea, oxamide, etc. It should be noted that the NPK fertilizer itself may contain other medium and trace elements, or some specially added medium and trace elements.

The multi-layer coating structure slow/controlled-release fertilizer forms a spherical-shaped unit including a fertilizer layer 110 and a coating layer 120 with layer-by-layer coating, and the fertilizer layer 110 is disposed separately from the coating layer 120. The ratio of nutrients such as nitrogen, phosphorus and potassium and other medium and trace elements of the fertilizer layer 110 can be predetermined according to different soil structures, different climatic conditions and different crop growth needs. For the polyurea formaldehyde as a coating layer 120, the fertilizer in the coated fertilizer 110 can be slowly and timely released according to the fertilizer requirement of the crops to meet the growth needs for different crops. Part of the water-soluble nutrient elements in the coated fertilizer layer 110 can be released from the pores formed by dissolution of the water-soluble part of the coating layer 120 and can be absorbed by crops. The water-insoluble part of the coating layer 120 can then be slowly decomposed under the action of soil microorganisms, to release all the remaining undissolved fertilizers in the fertilizer layer 110 for the crops to absorb. As the coating layer 120 decomposes layer by layer, the coated fertilizer layer 110 is released until the entire fertilizer granules are completely dispersed in the soil. Since the polyurea formaldehyde itself of the coating layer 120 is also a fertilizer, the fertilizer does not produce any residue while satisfying the needs for the growth of crops.

In an embodiment of the present invention, one-time application of the multi-layer coating structure slow/controlled-release fertilizer can meet the needs of all nutrients in the entire growth cycle of a crop. The nutrient release can be customized according to the crop type, so that the nutrient release time and intensity of the fertilizer can substantially synchronize with the fertilizer needs of the crop. When the crop needs a large amount of nutrients, it can be supplied effectively and quickly. On the other hand, when the crop needs a small amount of nutrients, it can be supplied slowly, and the medium and trace elements can also be designed to be placed on different fertilizer layers 110. This slow releasing mechanism improves fertilizer utilization rate and reduces the loss and/or immobilization of fertilizer, to achieve the purpose of applying adequate base fertilizer at one time, without the need for top dressing.

Polyurea formaldehyde is mainly prepared by the following steps: mixing urea and formaldehyde at a molar ratio of 1- 2.5:1, adjusting the pH of the reaction system to 7.5-11.5 and the temperature to 50°C-75°C, and then adjusting the pH to 2.5^{~}5.5.In one embodiment of the invention, for the method for preparing polyurea formaldehyde as a coating layer 120, the urea needs not to be dissolved in the water, but dissolved and reacted in the formaldehyde solution to obtain the mixed solution of methylol urea and urea, which has lower percentage of water, for example, 35%-45%. After adjusting the solution to an acid solution, the polymerization reaction will not occur in the aqueous phase, but after sprayed onto the surface of the fertilizer core 100 or the fertilizer layer 110, the film is formed by polymerization and solidification after water evaporation, and cross-linking and entanglement occur between the molecules. The film structure is compact and not disintegrated in the soil, thereby achieving the purpose of a controlled and slow release of various nutrients in the fertilizer core 100 and the fertilizer layer 110.

In some embodiments of the present invention, the molar ratio of urea to formaldehyde is 1.2-2.2:1 or 1.5-2:1 or 1.6-1.8:1.

The compositions and contents of fertilizer core 100 and fertilizer layer 110, and the carbon chain length and coating thickness of coating layer 120 can be calculated and determined according to the fertilizer requirements of different crops in the growth cycle thereof under different soil and climatic conditions. It is noted that the fertilizer requirement is determined according to the crop fertilizer efficiency tests carried out in scientific research institutions in the country and around the world, or the soil tests and fertilizer efficiency tests carried out by the manufacturers.

In conventional polyurea formaldehyde preparation method, the particulate urea is dissolved in water at first, formaldehyde solution is then added, and when the mixed solution is heated to a predetermined temperature, the pH value is adjusted to initiate a methylolation reaction. After the reaction is completed, the pH value and temperature are adjusted again to initiate a polymerization reaction. The polyurea formaldehyde prepared by the conventional method is a suspension and the polymerization reaction is completed in the water. After the polymerization reaction, the water content is as high as 70%, and it is required to remove partial water by discharging, cooling, and centrifuging or plate-and-frame filtration. At this time, the filter cakes still contain 35% to 45% of water, which must be removed by high-temperature heating provided by a drying machine 380, and finally a powdery and blocky mixture of polyurea formaldehyde is obtained. Due to high percentage of water in the polyurea formaldehyde prepared by the conventional method, it is impossible to achieve spraying to form a film on its own. Although it is capable of wrapping as a film after being mixed with other binders, cross-linking and entanglement between molecules will not occur, so the film may not be dense enough in the structure, and it may be easily dispersed and disintegrated in the soil, and the granules of fertilizer core 100 cannot be released slowly.

In some embodiments, the thickness of each coating layer 120 prepared by the method of the present invention and its composition determine the release time of the coated fertilizer. In still some embodiments, the multi-layer coating structure slow/controlled-release fertilizer comprises at least two layers of the coating layer 120, with the same thickness. In some embodiments of the present invention, the at least two layers of the coating layer 120 have different thicknesses. In other embodiments, the polyurea formaldehyde of at least two layers of coating layer 120 has components of the same carbon chain lengths. In other embodiments, the polyurea formaldehyde of at least two layers of coating layer 120 has components of different carbon chain lengths.

Generally speaking, polyurea formaldehyde is a slow-release nitrogen fertilizer containing four forms of nitrogen in urea formaldehyde, and includes a part of unreacted excess urea, monomethylol urea, dimethylol urea and monomethylenediurea that are soluble in cold water, dimethylenetriurea and trimethylenetetraurea that are insoluble in cold water but soluble in hot water, and the urea having a carbon chain length exceeding four carbon atoms that is insoluble in hot water. The main components of polyurea formaldehyde are a series of condensates of urea and formaldehyde such as dimethylenetriurea, trimethylenetetraurea, etc. The condensate is slightly soluble in water and can control the release of nitrogen and prevent nitrogen loss, and it can be slowly decomposed by microorganisms in the soil. The polyurea formaldehyde, as the coating layer 120, can control the release amount of the coated fertilizer, so that it can be fully and timely absorbed and utilized by crops.

In some embodiments, the polyurea formaldehyde is a slow release fertilizer containing the above four forms of nitrogen. In some embodiments, the polyurea formaldehyde is a slow release fertilizer containing the first three forms of nitrogen. In some embodiments, the polyurea formaldehyde is a slow release fertilizer containing the latter three forms of nitrogen. In some embodiments, the polyurea formaldehyde is a slow release fertilizer containing two forms of nitrogen, that is, the nitrogen that is insoluble in cold water but soluble in hot water, and the nitrogen that is insoluble in hot water.

In the present invention, the term "fertilizer layer 110" includes at least two of nitrogen fertilizer, phosphorus fertilizer and potassium fertilizer. In some embodiments, the fertilizer layer 110 comprises: (a) at least one macronutrient fertilizer from nitrogen fertilizer, phosphorus fertilizer or potassium fertilizer; and optionally (b) at least one trace element fertilizer. In some embodiments, the fertilizer layer 110 may include: (a) macronutrient fertilizers nitrogen fertilizer, phosphorus fertilizer and potassium fertilizer; and optionally (b) at least one trace element fertilizer. In some embodiments, the trace element fertilizer is selected from boron fertilizer, zinc fertilizer, molybdenum fertilizer, iron fertilizer, manganese fertilizer, copper fertilizer, etc. or combinations thereof. In some embodiments, the fertilizer layer 110 is a fertilizer other than polyurea formaldehyde on its own.

In addition, it should be noted that the polyurea formaldehyde as the coating layer 120 itself is a nitrogen fertilizer. The nitrogen fertilizer in the coated fertilizer layer 110 may be one or more slow-acting or quick-acting fertilizers of polyurea formaldehyde, urea, isobutylidene diurea, crotonylidenediurea, oxamide, ammonium sulfate, and ammonium nitrate.

It should be noted that the coated fertilizer layer 110 can be mixed with polyurea formaldehyde and other nutrient elements such as Ca, Mg, etc. Alternatively, other elements such as Ca and Mg may be mixed in the phosphorus fertilizer and the potassium fertilizer, so that it can provide other nutrients required for the crop when the polyurea formaldehyde as the coating layer 120 is slowly decomposed.

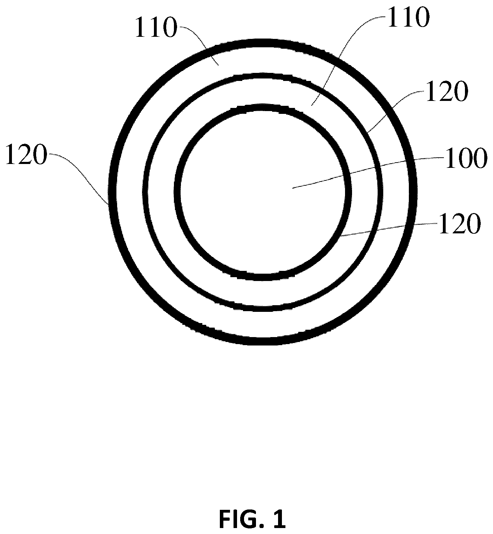

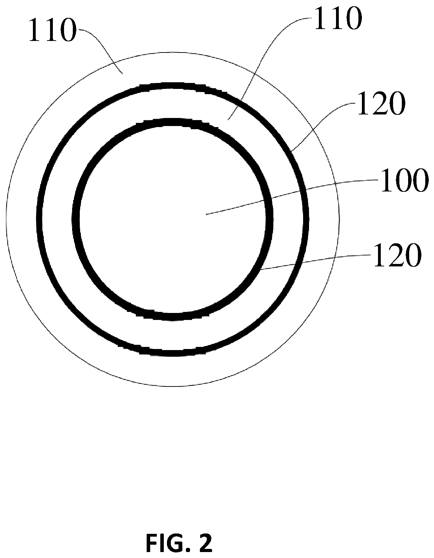

In some embodiments, the multi-layer coating structure slow/controlled-release fertilizer comprises at least two layers of coating layer 120, or at least three layers of coating layer 120, or at least four layers of coating layer 120. In some embodiments, the outermost layer of the multi-layer coating structure slow/controlled-release fertilizer is a polyurea formaldehyde coating layer 120, as shown in FIG.1. In some embodiments, the outermost layer of the multi-layer coating structure slow/controlled-release fertilizer is the fertilizer layer 110 that contains polyurea formaldehyde, as shown in FIG.2. In some embodiments, the outermost layer of the multi-layer coating structure slow/controlled-release fertilizer is a fertilizer layer 110 that does not contain polyurea formaldehyde.

The fertilizer core 100 may be a common chemical fertilizer purchased from the market, or may be a fertilizer component prepared in proportion, or may be granular fertilizer containing polyurea formaldehyde. For example, the fertilizer component may include at least one of the following: urea, monoamine phosphate, diamine phosphate, potassium dihydrogen phosphate, potassium chloride, potassium sulfate, potassium nitrate, ammonium sulfate and ammonium chloride, etc.

In some embodiments, the release amount of each fertilizer element of the multi-layer coating structure slow/controlled-release fertilizer is substantially the same as the fertilizer requirement of the corn crop (herein referred to as "corn-specific fertilizer").

In some embodiments, the corn-specific fertilizer includes the following from the inside to outside:
(a) Fertilizer core 100, includes urea, monoammonium phosphate, potassium chloride; nitrogen accounts for about 20% of total nitrogen in the entire fertilizer granules; phosphorus accounts for 15% of total phosphorus, and potassium accounts for 5% of total potassium.
(b) Polyurea formaldehyde coating layer 120, nitrogen accounts for about 7% of the total nitrogen of the entire fertilizer granules.
(c) Fertilizer layer 110, including urea, monoammonium phosphate, potassium chloride; nitrogen accounts for 50% of total nitrogen in the entire fertilizer granules; phosphorus accounts for 65% of total phosphorus; and potassium accounts for 80% of total potassium.
(d) Polyurea formaldehyde coating layer 120, nitrogen accounts for
   about 10% of the total nitrogen of the entire fertilizer granules.
(e) Fertilizer layer 110, including urea, monoammonium phosphate,
   potassium chloride, polyurea formaldehyde, zinc sulfate, and dolomite powder; nitrogen accounts for 13% of total nitrogen in the entire fertilizer granules; phosphorus accounts for 20% of total phosphorus; and potassium accounts for 15% of total potassium.

In some embodiments, the release amount of each fertilizer element of the multi-layer coating structure slow/controlled-release fertilizer is substantially the same as the fertilizer requirement of the wheat crop (herein referred to as "wheat-specific fertilizer"). In some embodiments, the wheat-specific fertilizer includes the following from the inside to outside:
(a) Fertilizer core 100, including urea, monoammonium phosphate, potassium chloride; nitrogen accounts for about 15% of total nitrogen in the entire fertilizer granules; phosphorus accounts for 20% of total phosphorus; and potassium accounts for 30% of total potassium.
(b) Polyurea formaldehyde coating layer 120, nitrogen accounts for about 10% of the total nitrogen of the entire fertilizer granules.
(c) Fertilizer layer 110, including urea, monoammonium phosphate, potassium chloride; nitrogen accounts for 30% of total nitrogen in the entire fertilizer granules; phosphorus accounts for 40% of total phosphorus; and potassium accounts for 50% of total potassium.
(d) Polyurea formaldehyde coating layer 120, nitrogen accounts for 12% of the total nitrogen of the entire fertilizer granules.
(e) Fertilizer layer 110, including urea, monoammonium phosphate, potassium chloride, zinc sulfate, borax, dolomite powder; nitrogen accounts for 25% of total nitrogen in the entire fertilizer granules; phosphorus accounts for 40% of total phosphorus; and potassium accounts for 20% of total potassium.
(f) Polyurea formaldehyde coating layer 120, nitrogen accounts for about 8% of the total nitrogen of the entire fertilizer granules.

In some embodiments, the release amount of each fertilizer element of the multi-layer coating structure slow/controlled-release fertilizer is substantially the same as the fertilizer requirement of the rice crop (herein referred to as "rice-specific fertilizer"). In some embodiments, the rice-specific fertilizer includes the following from the inside to outside:
(a) Fertilizer core 100, including urea, DAP, potassium chloride; nitrogen accounts for about 10% of total nitrogen in the entire fertilizer granules; phosphorus accounts for 5% of total phosphorus; and potassium accounts for 10% of total potassium.
(b) Polyurea formaldehyde coating layer 120, nitrogen accounts for about 7% of the total nitrogen of the entire fertilizer granules.
(c) Fertilizer layer 110, including urea, DAP, potassium chloride; nitrogen accounts for 10% of total nitrogen in the entire fertilizer granules; phosphorus accounts for 5% of total phosphorus; and potassium accounts for 20% of total potassium.
(d) Polyurea formaldehyde coating layer 120, nitrogen accounts for about 10% of the total nitrogen of the entire fertilizer granules.
(e) Fertilizer layer 110, including urea, DAP, potassium chloride, nitrogen accounts for 20% of total nitrogen in the entire fertilizer granules; phosphorus accounts for 20% of total phosphorus; and potassium accounts for 30% of total potassium.
(f) Polyurea formaldehyde coating layer 120, the nitrogen accounts for about 10% of the total nitrogen of the entire fertilizer granules.
(g) Fertilizer layer 110, including urea, calcium magnesium phosphate fertilizer, DAP, potassium chloride, polyurea formaldehyde; nitrogen accounts for 33% of total nitrogen in the entire fertilizer granules; phosphorus accounts for 70% of total phosphorus; and potassium accounts for 40% of total potassium.

In embodiments of this invention, the multi-layer coating structure slow/controlled-release fertilizer has a quick-acting, intermediate-acting and long-acting NPK nutrient distribution and it can achieve a reasonable combination of various elements for slow/controlled release. The quick-acting fertilizers such as urea, ammonium sulfate, monoammonium phosphate, diammonium phosphate and potassium chloride in the present invention can be quickly released for crop absorption, and the calcium magnesium phosphate fertilizer can provide the citric-acid-soluble phosphorus, calcium, magnesium and silicon. The polyurea formaldehyde in the fertilizer can provide intermediate-acting and long-acting nitrogen nutrients after being decomposed by soil microorganisms to meet the nutrient requirements of the entire slow growth cycle of the crop. In addition, phosphorus, potassium and other medium and trace elements can be mixed with the urea formaldehyde to achieve slow controlled release.

Moreover, for the coating layer 120 in the embodiments of the present invention, the methylol urea has an adsorption function, which promotes the combination of fertilizer nutrients and soil granules to adsorb on the roots of the crop and form a gel-like chelate, thereby reducing nutrient loss, and achieving full nutrient absorption by crops and improving the utilization rate of the fertilizer. Compared with other controlled release fertilizers, the product is less affected by climate (temperature) and soil conditions during nutrient release, and the fertilizer efficiency is more stable and lasting.

The present invention concerns a method of preparing the above multi-layer coating structure slow/controlled-release fertilizer as defined in the set of claims. The method includes the steps of: applying fertilizer corresponding to the fertilizer layer 110 and the coating layer 120 to the periphery of the fertilizer core 100 in a predetermined order to form layer-by-layer coated fertilizer granules. Application is performed by spraying, rolling agglomerates or a combination thereof.

Specifically, in some embodiments of the present invention, the main steps of the spraying method may include: first separately preparing liquid coating material of different carbon chain lengths in a plurality of reactors, preparing the components of each fertilizer layer 110 according to a ratio in a plurality of slurry tanks or powdering tanks 310. The components to be made as fertilizer core 100 are first fed to a rotor drum granulator 370, then the liquid coating material of different carbon chain lengths in a plurality of successive reactors and components of fertilizer layer 110 in the slurry tanks and/ or powdering tanks 310 are sprayed in the predetermined sequence into the rotor drum granulator 370, so that the fertilizer granules continue to enlarge toward the predetermined thickness of fertilizer layer 110 and the coating layer 120 until the target value is reached.

It should be noted that, due to different spraying sequences and spraying times, different thicknesses of fertilizer layer 110 and the coating layer 120 can be formed, to form controlled-release fertilizers with different fertilizer effects. In addition, the spraying may be carried out intermittently or continuously according to the preparation needs of the fertilizer, and the granulating and drying may also be carried out in different granulators and drying machines 380, respectively.

In addition, a layer of fertilizer layer 110 may be formed by spraying one time or multiple times. For the fertilizer layer 110 formed by multiple layers of spraying, the fertilizers being sprayed multiple times may be different or the same. A layer of coating layer 120 may be formed by spraying one time or multiple times, and the components of coating layer 120 and polyurea formaldehyde slow-release fertilizer after being sprayed multiple times may be the same or different.

The preparation of the multi-layer coating structure slow/controlled-release fertilizer in the present invention needs a reactor, a slurry tank and/or a powdering tank 310, a granulator, a drying machine 380 and supporting facilities. The preparation features are to control the proportion of each layer of fertilizer, coating amount, the coating position in the entire fertilizer granules, the thickness and carbon chain length of each layer of coating layer 120 according to the design procedure. The entire process can be carried out intermittently or continuously, to achieve mass production.

Furthermore, the fertilizer granules are sprayed with hot air into a drying machine 380 for drying, and then sieved, cooled, packaged, and stored. Also, the polyurea formaldehyde of the coating layer 120 is obtained by in-situ polymerization, while evaporating and removing water on the surface of the fertilizer layer 110, of liquid coating material including methylol urea under acidic conditions.

Specifically, urea and formaldehyde are formed into a methylol urea at a pH of 7.5-11.5 and a temperature of 50 °C to 75 °C, and then the pH is adjusted to 2 to 5.5 to form a raw polyurea formaldehyde coating liquid. The liquid coating material is then sprayed on the surface of the fertilizer core 100 to form a coating layer 120, and then a second layer of fertilizer is sprayed on the surface of the coating layer 120 to form a fertilizer layer 110, and then the liquid coating material is sprayed to form a second layer of coating layer 120, and this process is repeated sequentially. In addition, as needed, the liquid polyurea formaldehyde coating material can also be mixed and sprayed together with a fertilizer as a component of the fertilizer layer 110.

In some embodiments, in order to accelerate the rate of water evaporation, the fertilizer core 100 can be preheated. For example, the fertilizer core 100 is preheated to 60 °C -120 °C, or 65 °C -105 ° C, or 70 °C -100 °C, or 80 °C -90 °C.

Since the carbon chains contained in the polyurea formaldehyde are mostly of length 2 to 5, the percentage of water content is only 35%-45%, and the concentration is high. When the liquid coating material is sprayed onto the surface of the fertilizer layer 110, the moisture is evaporated, and polymerization and solidification take place so as to coat the surface of the fertilizer layer 110.

The carbon chain length of the polyurea formaldehyde that produces the coating layer 120 can then be changed by adjusting the molar ratio of urea and formaldehyde, the pH and temperature of the reaction system.

Since polymerization and solidification happen during evaporation, the molecules having different chain lengths are cross-linked to each other during the formation of the coating layer 120. In the soil, some of the water-soluble components of the coating layer 120 are first dissolved to form pores, so that some of the water-soluble components in the fertilizer layer 110 are dissolved to provide nutrients for crops. The coating layer 120 is then slowly decomposed, so that the coated fertilizer components are released slowly to provide more nutrients to crops. When the operating conditions are different, the carbon chain length distributions of the coating layer 120 are different and the slow/controlled-release strengths are different. Under the action of soil microorganisms, the coating layer 120 is dissolved and decomposed from outside to inside layer by layer, and the coated fertilizer layer 110 is slowly released for crop absorption.

In some embodiments of the present invention, the water content of liquid coating material is within the range of 35% to 45% by weight.

The preparation method of the controlled release fertilizer according to the embodiment of the invention has the characteristics of short process route and low energy consumption, so a large-scale industrial production can be carried out. The features and performance of the present invention are further described in detail below in combination with the embodiments.

Example 1: The method for preparing Corn-specific fertilizer in Henan Region According to the fertilizer requirements of corn in the fluvo-aquic soil on the alluvial plain of the Yellow River and the soil test results in the test field searched in relevant literatures, we design the fertilizer core 100, each fertilizer layer 110 and coating layer 120 according to previous plot tests on the release and utilization of various nutrients in the multi-layer coating structure slow/controlled-release fertilizer. And according to the design, we produce the corn-specific fertilizer with the content of 27-8-5, and carry out field tests.

Major raw materials of the fertilizer include: urea, 37% of formaldehyde solution, powdered monoammonium phosphate with a content of 11-44-0, potassium chloride with a content of 0-0-60, zinc sulfate and dolomite powder.

The ratio of various elements for preparation of 1000 kg corn-specific fertilizer is calculated as following: Polyurea formaldehyde 135kg, urea 425kg, monoammonium phosphate 185kg, potassium chloride 85kg, zinc sulfate 5kg and dolomite powder 165kg are required. The contents of nitrogen, phosphorus and potassium of core granules are 20%, 15% and 5% of the total NPK of the fertilizer granules respectively. The first fertilizer layer 110 contains 50%, 65% and 80% of the total nitrogen, phosphorus and potassium of the fertilizer granules respectively, and the second fertilizer layer 110 contains 13%, 20% and 15% of the total nitrogen, phosphorus and potassium of the fertilizer granules respectively. The nitrogen content of the first coating layer 120 is 7% of the total nitrogen of the fertilizer granules, and the nitrogen content of the second coating layer 120 is 10% of the total nitrogen of the fertilizer granules. The sustained release nitrogen content of polyurea formaldehyde accounts for 20% of the total nitrogen of the fertilizer granules.

Fertilizer core 100: the fertilizer core 100 is prepared according to the mass ratio of urea, monoammonium phosphate and potassium chloride at 26.8:6.6:1. The fertilizer granules having a diameter of about 1.5 mm are prepared in advance from urea, monoammonium phosphate and potassium chloride in the above ratio by using high-tower granulation equipment.

Reactor: put the urea and formaldehyde in a reactor at a molar ratio of 2:1, heating while stirring; at the same time add sodium carbonate solution, adjust the pH value to 8.5-9.5, raise the temperature to 50-70°C, and control the reaction time for about 45 minutes. Then add dilute sulfuric acid solution, adjust the pH to 2.5^{~}4.5, and control the reaction time for about 25 minutes.

First slurry tank 320: pour 265kg of urea, 118kg of monoammonium phosphate and 67kg of potassium chloride to a tank which has water already, continuously stir and heat to 95°C for standby.

Powdering tank 310: pour 50kg of urea, 36kg of monoammonium phosphate, 13kg of potassium chloride, 5kg of zinc sulfate and 165kg of dolomite powder that have been treated into the tank to mix evenly.

First feed a calculated amount of the granules of fertilizer core 100 to a rotor drum granulator 370, preheat the fertilizer granules to around 90°C with hot air at 300°C. Spray the coating liquid in the reactor to the surface of the granules of fertilizer core 100 with a liquid slurry pump 360, to initiate polymerization and solidification on the surface of granules. Spray for 7 minutes, simultaneously remove the water by hot air evaporation to form a first coating layer 120. Then, start the liquid slurry pump 360 of the first slurry tank 320, spray the slurry containing urea, monoammonium phosphate, and potassium chloride to rolling granules in the rotor drum granulator 370, to uniformly cover the surface of the first coating layer 120 by adhesion. Spray for 15 minutes, simultaneously remove the water by hot air evaporation to form a first fertilizer layer 110. Start the liquid slurry pump 360 of the reactor to spray the coating liquid to the surface of the first fertilizer layer 110 to initiate polymerization and solidification on the surface of granules. Spray for 12 min, simultaneously remove the water by hot air evaporation to form a second coating layer 120. Finally start the powdering machine 311 of the powdering tank 310, feed the urea, monoammonium phosphate, potassium chloride, zinc sulfate and dolomite powder which have been processed and mixed to the granulator evenly, and meanwhile start the liquid slurry pump 360 of the reactor to spray the polyurea formaldehyde into the granulator. The urea formaldehyde and powder are adhered to the surface of the second coating layer 120, until the addition of materials is complete. At the same time, remove the water by hot air evaporation to form a second fertilizer layer 110, and then carry out the operations of sieving, cooling and packaging.

Example 2: The method for preparing wheat-specific fertilizer in Henan Region According to the fertilizer requirements of wheat in the fluvo-aquic soil on the alluvial plain of the Yellow River and the soil test results in the test field searched in relevant literatures, we design fertilizer core 100, each fertilizer layer 110 and coating layer 120 on the basis of previous plot tests on the release and utilization of various nutrients in the multi-layer coating structure slow/controlled-release fertilizer in the present invention. And according to the design, we produce the wheat-specific fertilizer with content of 25-12-8, and carry out field tests.

Major raw materials of the fertilizer include urea, 37% of formaldehyde solution, powdered monoammonium phosphate with a content of 11-44-0, potassium chloride with a content of 0-0-60, zinc sulfate, borax and dolomite powder.

The ratio of various elements for preparation of 1000 kg wheat-specific fertilizer is calculated as following. Polyurea formaldehyde 190kg, urea 315kg, monoammonium phosphate 275kg, potassium chloride 135kg, zinc sulfate 5kg, borax 5kg and dolomite powder 75kg are needed. The contents of nitrogen, phosphorus and potassium of core granules are 15%, 20% and 30% of the total NPK of the fertilizer granules respectively. The first layer of fertilizer layer 110 contains 30%, 40%, 50% of the total nitrogen, phosphorus and potassium of the fertilizer granules respectively. The second fertilizer layer 110 contains 25%, 40%, 20% of the total nitrogen, phosphorus and potassium of the fertilizer granules respectively. The percentage of nitrogen of the first coating layer 120 is 10% of the total nitrogen of the fertilizer granules, the percentage of nitrogen of the second coating layer 120 is 12% of the total nitrogen of the fertilizer granules, and the percentage of nitrogen of the third coating layer 120 is 8% of the total nitrogen of the fertilizer granules. The outermost layer is the third coating layer 120 of the polyurea formaldehyde. The sustained release nitrogen content of polyurea formaldehyde accounts for 30% of the total nitrogen of the fertilizer granules.

Fertilizer core 100: the fertilizer core 100 is prepared according to the mass ratio of urea, monoammonium phosphate and potassium chloride at 1.7:1.4:1. The fertilizer granules having a diameter of about 1.5 mm are prepared in advance from urea, monoammonium phosphate and potassium chloride in the above ratio by using high-tower granulation equipment.

First reactor 340: put the urea and formaldehyde in the first reactor 340 at a molar ratio of 2.2:1, heating while stirring; at the same time, add sodium carbonate solution, adjust the pH value to 8.5-9.5, raise the temperature to 50-70°C, and control the reaction time for about 45 minutes. Then add dilute sulfuric acid solution, adjust the pH value to 2.5^{~}4.5, and control the reaction time for about 25 minutes.

Second reactor 350: put the urea and formaldehyde in the second reactor 350 at a molar ratio of 1.8:1, heating while stirring; at the same time, add sodium carbonate solution, adjust the pH value to 8.5-9.5, raise the temperature to 50-70°C, and control the reaction time for about 40 minutes. Add dilute sulfuric acid solution, adjust the pH value to 2.5^{~}4.5, and control the reaction time for about 20 minutes.

First slurry tank 320: pour 137 kg of urea, 110 kg of monoammonium phosphate, 67.5 kg of potassium chloride to a tank which has water already, and continuously stir and heat to 95°C for standby.

Second slurry tank 330: pour 110 kg of urea, 110 kg of monoammonium phosphate, 27 kg of potassium chloride to a tank which has water already, and continuously stir and heat to 95°C for standby.

Powdering tank 310: pour 5kg of zinc sulfate, 55kg of borax, 75kg of dolomite powder that have been treated into the tank to mix evenly.

First feed a calculated amount of the granules of fertilizer core 100 to a rotor drum granulator 370, preheat the fertilizer granules to around 100°C with hot air at 350°C. Spray the coating liquid in the first reactor 340 to the surface of the granules of fertilizer core 100 with a liquid slurry pump 360, to initiate polymerization and solidification on the surface of granules. Spray for 9 minutes, simultaneously remove the water by hot air evaporation to form a first coating layer 120. Then, start the liquid slurry pump 360 of the first slurry tank 320, spray the slurry containing urea, monoammonium phosphate, and potassium chloride to rolling granules in the rotor drum granulator 370, to uniformly cover the surface of the first coating layer 120 by adhesion. Spray for 13 minutes, simultaneously remove the water by hot air evaporation to form a first fertilizer layer 110. Start the liquid slurry pump 360 of the second reactor 350 to spray the coating liquid to the surface of the first fertilizer layer 110, to initiate polymerization and solidification on the surface of granules. Spray for 14 minutes, simultaneously remove the water by hot air evaporation to form a second coating layer 120. Then start the liquid slurry pump 360 of the second slurry tank 330, spray the slurry containing urea, monoammonium phosphate, and potassium chloride to the rolling granules in the rotor drum granulator 370, to uniformly cover the surface of the second coating layer 120 by adhesion. Spray for 12 minutes, start the powdering machine 311 of the powdering tank 310, feed the zinc sulfate, borax, dolomite powder which have been processed and mixed into the rotor drum granulator 370 evenly, simultaneously remove the water by hot air evaporation to form a second fertilizer layer 110. Finally start the liquid slurry pump 360 of the first reactor 340, spray the remaining coating liquid onto the surface of the second fertilizer layer 110, and simultaneously remove the water by hot air evaporation to form a third coating layer 120. Then, the fertilizer granules are dried in a drying machine 380, sieved by a sieving machine 390, and then proceed for cooling and packaging.

### Example 3: The method for preparing rice-specific fertilizer in Henan Region

According to the fertilizer requirements of rice in the fluvo-aquic soil on the alluvial plain of the Yellow River and the soil test results in the test field searched in relevant literatures, we design fertilizer core 100, each fertilizer layer 110 and coating layer 120 on the basis of previous plot tests on the release and utilization of various nutrients in the multi-layer coating structure slow/controlled release fertilizer. And according to the design, we produce the wheat-specific fertilizer with the content of 28-12-10, and carry out field tests.

Major raw materials of fertilizer: urea, 37% of formaldehyde solution, powdered diammonium phosphate with a content of 18-46-0, 0-18-0 calcium magnesium phosphate fertilizer, potassium chloride with a content of 0-0-60.

The ratio of various elements for preparation of 1000 kg rice-specific fertilizer is calculated as following. Polyurea formaldehyde 210kg, urea 332kg, diammonium phosphate 241kg, calcium magnesium phosphate fertilizer 50kg, potassium chloride 167kg are needed. The contents of nitrogen, phosphorus and potassium of core granules are 10%, 5%, 10% of the total NPK of the fertilizer granules respectively. The first layer of fertilizer layer 110 contains 10%, 5%, 20% of the total nitrogen, phosphorus and potassium of the fertilizer granules respectively. The second fertilizer layer 110 contains 20%, 20%, 30% of the total nitrogen, phosphorus and potassium of the fertilizer granules respectively. The third fertilizer layer 110 contains 33%, 70%, 40% of the total nitrogen, phosphorus and potassium of the fertilizer granules respectively. The percentage of nitrogen of the first coating layer 120 is 7% of the total nitrogen of the fertilizer granules, the percentage of nitrogen of the second coating layer 120 is 10% of the total nitrogen of the fertilizer granules, and the percentage of nitrogen of the third coating layer 120 is 10% of the total nitrogen of the fertilizer granules.

The inner layer of the outermost layer is mixed urea, diammonium phosphate and potassium chloride, and the outer layer is mixed calcium magnesium phosphate fertilizer and polyurea formaldehyde slow release nitrogen fertilizer. The slow release nitrogen content of the polyurea formaldehyde accounts for 30% of the total nitrogen of the fertilizer granules.

Fertilizer core 100: the fertilizer core 100 is prepared according to the mass ratio of urea, diammonium phosphate and potassium chloride at 3.7:1.2:1. The fertilizer granules having a diameter of about 1.3 mm are prepared in advance from urea, diammonium phosphate and potassium chloride in the above ratio by using high-tower granulation equipment.

First reactor 340: put the urea and formaldehyde in the reactor at a molar ratio of 2:1, heating while stirring; at the same time, add sodium hydroxide solution, adjust the pH value to 9.5-10.5, raise the temperature to 50-70°C, and control the reaction time for about 40 minutes. Add dilute sulfuric acid solution, adjust the pH value to 2.5-4.5, and control the reaction time for about 25 minutes.

Second reactor 350: put the urea and formaldehyde in the reactor at a molar ratio of 1.6:1, heating while stirring; at the same time, add sodium hydroxide solution, adjust the pH value to 8.5-10.0, raise the temperature to 50-70°C, and control the reaction time for about 40 minutes. Add 10% sulfuric acid solution, adjust the pH value to 2.5-4.0, and control the reaction time for about 20 minutes.

First slurry tank 320: pour 56 kg of urea, 13 kg of diammonium phosphate, 33.5 kg of potassium chloride to a tank which has water already, and continuously stir and heat to 100°C for standby.

Second slurry tank 330: Pour 117kg of urea, 52 kg of diammonium phosphate, 66.8 kg of potassium chloride to a tank which has water already, and continuously stir and heat to 95°C for standby.

Third slurry tank: pour 103g of urea, 163kg of diammonium phosphate, 50kg of potassium chloride to a tank which has water already, and continuously stir and heat to 95°C for standby.

Powdering tank 310: pour calcium magnesium phosphate fertilizer into the tank for use.

First feed a calculated amount of the granules of fertilizer core 100 to a rotor drum granulator 370, preheat the fertilizer granules to around 120°C with hot air at 350°C. Spray the coating liquid in the first reactor 340 to the surface of the granules of fertilizer core 100 with a liquid slurry pump 360, to initiate polymerization and solidification on the surface of granules. Spray for 6 minutes, simultaneously remove the water by hot air evaporation to form a first coating layer 120. Then, start the liquid slurry pump 360 of the first slurry tank 320, spray the slurry containing urea, monoammonium phosphate, and potassium chloride to rolling granules in the rotor drum granulator 370, to uniformly cover the surface of the first coating layer 120 by adhesion. Spray for 5 min, simultaneously remove the water by hot air evaporation to form a first fertilizer layer 110. Start the liquid slurry pump 360 of the second reactor 350 to spray the coating liquid to the surface of the first fertilizer layer 110, to initiate polymerization and solidification on the surface of granules. Spray for 10 minutes, simultaneously remove the water by hot air evaporation to form a second coating layer 120. Then start the liquid slurry pump 360 of the second slurry tank 330, spray the slurry containing urea, diammonium phosphate, and potassium chloride to rolling granules in the rotor drum granulator 370, to uniformly cover the surface of the second coating layer 120 by adhesion. Spray for 5 minutes, simultaneously remove the water by hot air evaporation to form a second fertilizer layer 110. Start the liquid slurry pump 360 on the second reactor 350 to spray the coating liquid to the surface of the second fertilizer layer 110, to initiate polymerization and solidification on the surface of granules. Spray for 10 minutes, simultaneously remove the water by hot air evaporation to form a third coating layer 120. Then start the liquid slurry pump 360 of the third slurry tank, spray the slurry containing urea, diammonium phosphate, and potassium chloride to rolling granules in the rotor drum granulator 370, to uniformly cover the surface of the third coating layer 120 by adhesion until the coating is finished. At the same time, remove the water by hot air evaporation to form the inner layer of fertilizer of a third fertilizer layer 110. Restart the first reactor 340 and simultaneously start the powdering machine 311 of the powdering tank 310, feed the calcium magnesium phosphate fertilizer to the granulator evenly, and the urea formaldehyde and powder are attached to the surface of fertilizer granules.

Meanwhile, remove the water by hot air evaporation to form an outer layer of fertilizer of a third fertilizer layer 110, and then carry out the operations of sieving, cooling and packaging.

### Comparative Example 1

The fertilizer in Comparative Example 1 is a conventional compound fertilizer with the same contents as the fertilizer in Example 1.

### Comparative Example 2

The fertilizer in Comparative Example 2 is a conventional compound fertilizer with the same contents as the fertilizer in Example 2.

### Comparative Example 3

The fertilizer in Comparative Example 3 is a conventional compound fertilizer with the same contents as the fertilizer in Example 3.

### Test Example 1

The multi-layer coating structure slow/controlled-release fertilizers of Example 1-3 in the present invention and the conventional fertilizers as Comparative Examples 1-3 are applied to the experimental fields of corn, wheat and rice in different plots. One-time base fertilizer is used, without topdressing. The experimental fields are located in Henan region, and their soils belong to fluvo-aquic soil. Before the implementation, soil assay is performed on the test plots. According to the assay results, we design the test program, record agronomic matters of crops during the growth process and perform statistical analysis on crop yields after harvesting.

**Table 1: Statistical results for experimental fields**

| No. | Growth Cycle | Growth Conditions | | | | | |
|---|---|---|---|---|---|---|---|
| | | Corn | | Wheat | | Rice | |
| | | Example1 | Comparative Example 1 | Example 2 | Comparative Example 2 | Example 3 | Comparative Example 3 |
| 1 | Seeding stage | Grow normally | Grow quickly | Grow well normal color | Fast growing dark color | Grow well | Grow well |
| 2 | Tillering | / | / | Normal tillering | More tillering | Normal tillering | More tillering |
| 3 | Turn green | / | / | Turn green well | Turn green slowly | / | / |
| 4 | Jointing | Grow quickly | Growth slowed down | Grow well | Grow slowly | Grow well | Grow slowly |
| 5 | Booting | / | / | More spikes | Less spikes | More and Long spikes | Less and short spikes |
| 6 | Maturity | The stick is thick and long, and the grain is full | The stick is thin, short and small, and the grain is small | Big spikes and full grain | Small spikes and small grain | Full grains | Small grains |
| 7 | Plant | Stout stalk | Short plant | Stout stalk | Weak stalk | Stout stalk | Weak stalk |
| 8 | Fertilization amount kg/hm² | 750 | 750 | 750 | 750 | 975 | 975 |
| 9 | Yield kg/hm² | 9737 | 7685 | 9108 | 7005 | 11516 | 8783 |

It is noted that the amount applied to the fields of conventional quick-acting compound fertilizers and multi-layer coating structure slow/controlled-release fertilizers in the present invention is the same. They are applied in one time as base fertilizers, without topdressing. The content of NPK is the same, for corn: 27-8-5, for wheat: 25-12-8 and for rice: 28-12-10.

Analysis of results: the above results of field experiments show that comparing Examples 1-3 and the Comparative Examples 1-3, when the growth cycle and the amount of fertilization are the same, the multi-layer coating structure slow/controlled-release fertilizers in embodiments of the present invention herein can provide the nutrients needed by the crops in a timely manner, and the crops show healthy growth trends in each growth cycle, and the crop yields increase significantly, indicating that the fertilizer utilization rate has been significantly improved so it has a good promotion value. Although the conventional compound fertilizers can quickly provide the nutrients needed by the crops in the early stage of crop growth, it shows a significant lack of fertilizer in the middle and late stages of crop growth. Since the crops may not obtain nutrients in time, the crops grow slowly, and the seeds and grains are not full, for example corn has a long bald tip of corn cobs, small cobs, and light hundred-grain weight; and the wheat and rice have more inefficient tillers, few grains per spike, and light thousand-grain weight, etc., eventually leading to a decline in yields. The multi-layer coating structure slow/controlled-release fertilizers in the present invention can be designed as a layer-by-layer coated slow release structure according to the crop growth needs, to provide nutrients in the crop growth cycles in time, so that the crops grow healthily, with more and full grains, and high yields. The micronutrient fertilizer can also be designed in a suitable fertilizer layer 110 for the crop absorption at a certain growth stage.

In summary, embodiments of the present invention are some, not all, of the embodiments of the present invention.

## Claims

1. A method for preparing a multi-layer coating structure slow/controlled-release fertilizer, said multi-layer coating structure slow/controlled release fertilizer comprising a layer-by-layer coated fertilizer layer and a coating layer, wherein the fertilizer layer is separated from the coating layer, the fertilizer layer has at least two layers, the coating layer has at least two layers, and the innermost layer of the fertilizer layers is a fertilizer core; the fertilizer layer includes at least two of nitrogen fertilizer, phosphorus fertilizer and potassium fertilizer, the coating layer is polyurea formaldehyde, wherein the raw materials of the polyurea formaldehyde are urea and formaldehyde, the molar ratio of the urea to the formaldehyde is 1-2.5:1, and the polyurea formaldehyde includes at least a polyurea formaldehyde having two to five carbon atoms,
wherein the method comprises steps of: applying the fertilizer layer and the fertilizer corresponding to the coating layer to the periphery of the fertilizer core according to a preset order, to form layer-by-layer coated fertilizer granules and
wherein polyurea formaldehyde is prepared by the following steps: mixing urea and formaldehyde at a molar ratio of 1- 2.5:1, adjusting the pH of the reaction system to 7.5-11.5 and the temperature to 50°C-75°C, and then adjusting the pH to 2.5^{~}5.5.

2. The method for preparing a multi-layer coating structure slow/controlled-release fertilizer of claim 1, wherein an outermost layer of the multi-layer coating structure slow/controlled-release fertilizer is the fertilizer layer.

3. The method for preparing a multi-layer coating structure slow/controlled-release fertilizer of claim 1, wherein an outermost layer of the multi-layer coating structure slow/controlled-release fertilizer is the coating layer.

4. The method for preparing a multi-layer coating structure slow/controlled-release fertilizer of any one of claims 1-3, wherein the polyurea formaldehyde of the at least two layers of the coating layer has components of different carbon chain lengths.

5. The method for preparing a multi-layer coating structure slow/controlled-release fertilizer of any one of claims 1-3, wherein the polyurea formaldehyde of the at least two layers of the coating layer has components of the same carbon chain lengths.

6. The method for preparing a multi-layer coating structure slow/controlled-release fertilizer of any one of claims 1-3, wherein the multi-layer coating structure slow/controlled-release fertilizer comprises at least two layers of the coating layer with the same or different thicknesses.

7. The method for preparing a multi-layer coating structure slow/controlled-release fertilizer of claim 1, wherein the application is performed by spraying, rolling agglomerates or a combination thereof.

8. The method for preparing a multi-layer coating structure slow/controlled-release fertilizer of claim 1, wherein the polyurea formaldehyde of the coating layer is obtained by in-situ polymerization, while evaporating and removing water on the surface of the fertilizer layer, of methylol urea-containing liquid coating material under acidic conditions.

## Patentansprüche

1. Verfahren zur Herstellung eines mehrschichtigen Beschichtungsstrukturen mit Langzeit-/kontrollierbar freizugebendem Dünger,
charakterisiert darin, dass der besagte Dünger folgende Schichten aufweist:
eine mehrschichtige, schichtweise beschichtete Düngerschicht,
eine Beschichtungsschicht,
wobei:
- die Düngerschicht von der Beschichtungsschicht getrennt ist,
- die Düngerschicht mindestens zwei Unter-schichten enthält,
- die Beschichtungsschicht mindestens zwei Unter-schichten aufweist,
- die inneremoste Schicht der Düngerschicht einen Düngerkern bildet;
- die Düngerschicht mindestens zwei der folgenden Düngerarten enthält:
stickstoffhaltige Dünger, phosphathaltige Dünger oder kaliumhaltige Dünger,
- die Beschichtungsschicht aus Polyurea-Formaldehyd besteht, hergestellt aus Harnstoff und Formaldehyd im molaren Verhältnis von 1-2,5:1,
- das Polyurea-Formaldehyd mindestens eine Struktur mit 2-5 Kohlenstoffatomen in der Kette aufweist,
die durch folgende Schritte gekennzeichnet ist:
a) Schichtweise Auftragung der Düngerschicht und der Beschichtungsschicht auf die Peripherie des Düngerkerns gemäß einem vorgegebenen Ablauf, um granulierte, mehrschichtige Beschichtungsprodukte zu bilden;
b) Herstellung des Polyurea-Formaldehyds durch:
- Mischen von Harnstoff und Formaldehyd im Verhältnis 1-2,5:1,
- Anpassung des pH-Werts des Reaktionsmediums auf 7,5-11,5 bei 50°C-75°C,
- Säure adjustment auf pH 2,5-5,5.

2. Das Verfahren nach Anspruch 1, charakterisiert darin, dass die äußerste Schicht der mehrschichtigen Struktur die Düngerschicht ist.

3. Das Verfahren nach Anspruch 1, charakterisiert darin, dass die äußerste Schicht der mehrschichtigen Struktur die Beschichtungsschicht ist.

4. Das Verfahren nach einem beliebigen der Ansprüche 1-3, charakterisiert darin, dass das Polyurea-Formaldehyd der Beschichtungsschicht unterschiedliche Kohlenstoffkettenlängen in mindestens zwei Schichten aufweist.

5. Das Verfahren nach einem beliebigen der Ansprüche 1-3, charakterisiert darin, dass das Polyurea-Formaldehyd der Beschichtungsschicht gleich lange Kohlenstoffketten in mindestens zwei Schichten aufweist.

6. Das Verfahren nach einem beliebigen der Ansprüche 1-3, charakterisiert darin, dass die Beschichtungsschicht mindestens zwei Unter-schichten mit identischer oder unterschiedlicher Dicke aufweist.

7. Das Verfahren nach einem beliebigen der Ansprüche 1-3, charakterisiert darin, dass der Auftrag mittels Besprühen, Rollen von Agglomeraten oder einer Kombination dieser Methoden erfolgt.

8. Das Verfahren nach einem beliebigen der Ansprüche 1-3, charakterisiert darin, dass das Polyurea-Formaldehyd der Beschichtungsschicht durch in-situ-Polymerisation unter sauren Bedingungen entsteht, wobei Wasser an der Oberfläche der Düngerschicht unter Zugabe von hydroxymethyluriertem Flüssigbeschichtungsmaterial verdampft wird.

## Revendications

1. Une méthode de préparation d'un engrais à structure multicouche à libération lente/contrôlée,
**caractérisée en ce que** ladite structure comprend :
une couche d'engrais en couches superposées,
une couche de revêtement,
dans laquelle :
- la couche d'engrais est séparée de la couche de revêtement,
- ladite couche d'engrais comprend au moins deux sous-couches,
- ladite couche de revêtement comprend au moins deux sous-couches,
- la sous-couche interne des couches d'engrais est un noyau d'engrais ;
- la couche d'engrais contient au moins deux types choisis parmi les engrais azotés, phosphatés et potassiques,
- la couche de revêtement est constituée de polyuréa formaldéhyde synthétisé à partir d'une proportion molaire urée/formaldéhyde de 1-2,5:1,
- ledit polyuréa formaldéhyde présente au moins une structure à chaîne carbonée de 2 à 5 atomes,
la méthode comprenant les étapes suivantes :
a) Appliquer successivement les couches d'engrais et de revêtement sur la périphérie du noyau selon un ordre prédéfini pour former des granulés en couches superposées ;
b) Préparer le polyuréa formaldéhyde par :
- mélange d'urée et de formaldéhyde à rapport molaire 1-2,5:1,
- ajustement du pH à 7,5-11,5 et température à 50°C-75°C,
- acidification pour abaisser le pH à 2,5-5,5.

2. La méthode selon la revendication 1, **caractérisée en ce que** la couche externe de la structure multicouche est la couche d'engrais.

3. La méthode selon la revendication 1, **caractérisée en ce que** la couche externe de la structure multicouche est la couche de revêtement.

4. La méthode selon l'une quelconque des revendications 1 à 3, **caractérisée en ce que** les différentes couches de polyuréa formaldéhyde de la couche de revêtement présentent des longueurs de chaîne carbonée distinctes.

5. La méthode selon l'une quelconque des revendications 1 à 3, **caractérisée en ce que** les différentes couches de polyuréa formaldéhyde de la couche de revêtement présentent des longueurs de chaîne carbonée identiques.

6. La méthode selon l'une quelconque des revendications 1 à 3, **caractérisée en ce que** la couche de revêtement comprend au moins deux sous-couches de épaisseurs identiques ou différentes.

7. La méthode selon l'une quelconque des revendications 1 à 3, **caractérisée en ce que** l'application est réalisée par pulvérisation, en roulant des agglomérats ou une combinaison des deux.

8. La méthode selon l'une quelconque des revendications 1 à 3, **caractérisée en ce que** la polymérisation in situ du polyuréa formaldéhyde s'effectue par évaporation d'eau à la surface des couches d'engrais sous conditions acides, à partir d'un matériau liquide contenant de l'hydroxyméthylurée.
